# EUROPÄISCHE PATENTSCHRIFT

(11) **EP 1 656 539 B1**
(45) Veröffentlichungstag und Bekanntmachung des Hinweises auf die Patenterteilung: **30.06.2010**
(21) Anmeldenummer: 04762597.5
(22) Anmeldetag: 04.08.2004
(51) Int. Cl.: G01J 5/08

(54) **RADIOMETER, VISIEREINRICHTUNG FÜR EIN IR-GERÄT SOWIE VERFAHREN**
RADIOMETER, SIGHT FOR AN IR DEVICE AND METHOD
RADIOMETRE, DISPOSITIF DE VISEE POUR APPAREIL INFRAROUGE ET PROCEDE ASSOCIE

(30) Priorität: 06.08.2003 DE 10336097; 17.11.2003 US 714692
(43) Veröffentlichungstag der Anmeldung: 17.05.2006
(73) Patentinhaber: Testo AG, 79853 Lenzkirch (DE)
(72) Erfinder: GÖTZ, Meinrad, 79848 Bonndorf (DE); ZAHN, Patrick, 79871 Eisenbach (DE); DERR, Andreas, 79793 Wutöschingen (DE); ROSENSTIEL, Herbert, 79871 Eisenbach (DE); HAURY, Uwe, 79853 Lenzkirch (DE); SCHWÖRER, Wolfgang, 79843 Löffingen (DE); RICHTER, Axel, 06847 Dessau (DE); BAECKE, Martin, 06847 Dessau (DE)
(74) Vertreter: Hellmich, Wolfgang
(86) Internationale Anmeldenummer: PCT/DE2004/001752
(87) Internationale Veröffentlichungsnummer: WO 2005/015142

(56) Entgegenhaltungen:
- WO-A-2005/012859
- DE-A- 19 548 036
- DE-A- 19 616 863
- DE-A- 19 949 198
- US-A- 4 123 147
- US-A- 4 499 897
- US-A- 4 499 897
- US-A- 5 836 694
- US-A- 5 836 694
- US-A1- 2002 015 434
- US-A1- 2002 015 434
- US-B1- 6 234 669
- US-B1- 6 280 082
- US-B1- 6 280 082
- US-B1- 6 527 439

## Beschreibung

Die Erfindung betrifft ein IR-Gerät, insbesondere Radiometer zur berührungslosen Temperaturmessung an Objekten. Das IR-Gerät ist ferner mit einer Visiereinrichtung zur Visualisierung der Messfläche des Infrarotsensors auf dem Objekt ausgestattet. Darüber hinaus betrifft die Erfindung entsprechende Visiereinrichtungen. Ferner betrifft die Erfindung Verfahren zur Erzeugung einer sichtbaren Markierung der Messfläche eines Infrarotsensors auf dem Objekt. Schließlich betrifft die Erfindung die Justage von Lichtquellen in der Visiereinrichtung.

Eine Visiereinrichtung gemäß dem Oberbegriff des Patentanspruchs 1 sowie ein Verfahren gemäß dem Oberbegriff des Patentanspruchs 6 sind aus der WO 2005/012859 A1 (das ein Dokument unter Art. 54(3) EPÜ ist) bekannt. Radiometer dienen der berührungslosen Erfassung der Temperatur eines Objekts durch die Detektion der vom Objekt ausgehenden Infrarot-(IR)-Strahlung mit einem IR-Detektor. Der Bereich des Objekts, dessen Strahlung vom Detektor erfasst wird, wird als Strahlungsmessfläche oder nur Messfläche des Temperaturmessungsgeräts bezeichnet. Für eine zuverlässige Temperaturmessung ist es wichtig, den Ort und die Größe der Messfläche zu kennen. Ort und Größe der Messfläche hängen von der Ausrichtung des Messgerätes, dem Aufbau des Detektors, den Eigenschaften einer IR-Optik sowie der Messentfernung ab. Es sind verschiedene Bauformen von Visiereinrichtungen zur Messflächenvisualisierung bekannt, die eine sichtbare Markierung im Inneren und/oder am Rand der Messfläche erzeugen.

Die Markierung kann beispielsweise mehrere Lichtpunkte umfassen, die mit einem oder mehreren Lasern und angepassten Abbildungsoptiken am Rand der Messfläche erzeugt werden. Gemäß der DE 196 54 276 A1 werden die Lichtpunkte mit zueinander windschief verlaufenden Laserstrahlen erzeugt, die jeweils mit einem Umlenkprisma in die gewünschte Richtung gelenkt werden.

Aus der EP 0 867 699 A2, der US 5,368,392 und der US 2002/0015434 A1 ist bekannt, die Messfläche durch eine durchgehende Umrandungslinie zu markieren. Die Umrandungslinie kann durch einen rotierenden Laser erzeugt werden. In einer anderen Ausführungsform wird ein Laserstrahl durch einen rotierenden Spiegel so abgelenkt, dass er eine kreisförmige Umrandungslinie auf dem Objekt erzeugt. Wird der Laserstrahl mit einer Frequenz von mehr als 30 Herz bewegt, scheint er eine kontinuierliche Umrandung zu zeichnen. Eine weitere Ausführungsform dieser Schriften verwendet einen Strahlteiler um einen Laserstrahl in mehrere aufzuteilen und den Umfang der Messfläche mit mehreren Punkten zu markieren. Als Strahlteiler kann ein Bündel optischer Fasern verwendet werden. Alternativ hierzu können auch mehrere Einzellaser verwendet werden.

Aus der EP 0 458 200 A2 und US 5,172,978 ist ein Radiometer bekannt, bei dem die Visiereinrichtung koaxial um eine Kombination aus einem Detektor und einer Kondensorlinse angeordnet ist. Mit der Kondensorlinse wird der Detektor fokussiert auf das Objekt abgebildet. Die Messfläche besitzt lediglich die Größe der Sensorfläche des Detektors. Die Visiereinrichtung wird durch mindestens eine Ringlinse gebildet, mit der eine zusätzliche Lichtquelle ebenfalls fokussiert auf das Objekt abgebildet wird. Der IR-Strahlengang ist vom Strahlengang des sichtbaren Lichts getrennt. Gemäß einer Ausführungsform dieser Schriften können zwei Ring-Fresnel-Linsen verwendet werden. In einer weiteren Ausführungsform dieser Schriften kann ein Ringsspiegel zusammen mit einer Ringlinse zur Abbildung des sichtbaren Lichts verwendet werden.

Aus der DE 100 36 720 A1 ist ein ähnliches Radiometer bekannt. Die aus der EP 0 458 200 A2 bekannte Ringlinse wird hier als Toroidlinse bezeichnet. Da diese Schrift offenbart, dass Markierungslicht die Rückseite der Toroidlinse trifft, sind auch hier IR-Strahlengang vom Strahlengang des sichtbaren Lichts getrennt. Gemäß einer Ausführungsform bildet die IR-Optik den Detektor entlang einer optischen Achse ins Endliche ab, sodass der Messstrahlengang ein einschaliger Hyperboloid ist. Der entsprechende Markierungsstrahlengang wird dadurch gebildet, dass Licht von der Lichtquelle an der Toroidlinse in geraden Bahnen umgelenkt wird, die windschief zueinander und zur optischen Achse auf einer Hyperboloid-Oberfläche verlaufen, die den Messstrahlengang umschließt. Der Markierungsstrahlengang weist somit eine engste Einschnürung auf. Zur Erzeugung des Markierungsstrahlengangs besitzt die Toroidlinse einen nicht rotationssymmetrischen Linsenkörper, dessen Rückseite eine Kegelfläche und dessen Vorderseite eine stückweise stetige, schraubenförmige Ringfläche ist. Offenbart sind Ringflächen mit einem, zwei, zehn sowie 36 Abschnitten.

Die WO 2005/012859 A1 offenbart eine Vorrichtung zur berührungslosen Temperaturmessung mit einem Detektor, auf den von einem Messfleck auf einem Messobjekt ausgehende elektromagnetische Strahlung mittels einer Abbildungsoptik abgebildet wird. Der Detektor ist entlang der optischen Achse zwischen zwei Positionen verschiebbar, so dass eine Nah- und Fernfokussierung möglich ist. Die Vorrichtung umfasst ferner eine Visiereinrichtung zur Kennzeichnung der Position und/oder der Größe des Messflecks auf dem Messobjekt, wobei zwei Laserdioden für die Nahfokussierung und sechs Laserdioden für die Fernfokussierung vorgesehen und entsprechend ausgerichtet sind. Die Laser können einzelnen ansteuerbar sein, so dass sich der Eindruck einer sich drehenden Kreisanordnung ergibt. Die Frequenz der Laseransteuerung kann proportional zur gemessenen Temperatur gewählt werden. Eine andere Möglichkeit der Visualisierung des Messergebnisses besteht darin, die Farbe der Visierstrahlen in Abhängigkeit von der gemessenen Temperatur zu verändern, was durch Mischung von grünem und rotem Laserlicht erreicht wird. Beim Überschreiten einer vorgebbaren Schwellentemperatur kann ein Umschalten von roten auf grüne Laser vorgesehen sein.

Die US 6,527,439 B1 beschreibt ein Infrarotthermometer mit einer Visiereinrichtung. Dabei bilden drei sichtbare Lichtstrahlen nur dann eine voreingestellte Figur, wie beispielsweise einen Kreis, wenn die Messfläche genau einen voreingestellten Abstand vom Infrarotthermometer aufweist. Zusätzlich kann eine zweite Figur vorgesehen sein, die die gemessene Temperatur teilweise oder vollständig darstellt. Außerdem kann der Farbton der Lichtstrahlen entsprechend der Temperatur der Messfläche verändert werden.

Es ist Aufgabe der Erfindung eine weitere Visiereinrichtung, sowie ein Verfahren anzugeben.

Diese Aufgabe wird durch die Lehre der unabhängigen Ansprüche gelöst.

Bevorzugte Ausführungsformen der Erfindung sind Gegenstand der abhängigen Ansprüche.

Vorteilhaft daran, dass die Strahlengänge sowohl des sichtbaren Lichts zum Markieren der Messfläche als auch der IR-Strahlung durch ein und dieselbe Linse verlaufen, ist, dass ein Versatz zwischen den Strahlengängen gering gehalten wird. Auf diese Weise wird eine hohe Übereinstimmung zwischen Markierung und tatsächlicher Messfläche unabhängig vom Abstand zwischen Radiometer und Messfläche erzielt.

Durch die Verwendung eines Umlenkmittels kann der Abstand zwischen IR-Detektor und Lichtquelle ausreichend groß gewählt werden, sodass eine gute thermische Isolierung zwischen IR-Detektor und Lichtquelle erzielt werden kann. Eine schlechte thermische Isolierung zwischen IR-Detektor und Lichtquelle reduziert zumindest die Messgenauigkeit und kann sogar zu Falschmessungen führen.

Um zusätzliche Linsen einzusparen, kann das Umlenkmittel vorteilhafterweise eine Linsenfunktion umfassen, so dass Lichtstrahlen, die das Umlenkmittel an verschiedenen Orten treffen, um unterschiedliche Winkel abgelenkt werden.

Vorteilhaft an einem Prisma ist seine geringe Absorption.

Wird das Umlenkmittel durch einen Spiegel gebildet, so kann die Dicke der spiegelnden Metallschicht so gewählt werden, dass die IR-Strahlung den Spiegel fast vollständig passiert und sichtbares Licht fast vollständig gespiegelt wird.

Vorteilhaft an einer Bohrung in der Linsenmitte ist, dass das IR-transparente Linsenmaterial das zu Markierungszwecken dienende sichtbare Licht nicht abschwächt und trotzdem ein Versatz zwischen den Strahlengängen der IR-Strahlung und des sichtbaren Lichts vermieden wird.

Alternativ hierzu kann das Umlenkmittel ein zentrales Loch aufweisen, durch das die IR-Strahlung ungeschwächt auf den IR-Detektor fällt. Das zu Markierungszwecken dienende sichtbare Licht fällt andererseits durch den Rand der IR-Linse, so dass es nur eine kurze Strecke im IR-transparenten Linsenmaterial zurücklegen muss und deshalb nur wenig abgeschwächt wird.

Eine oder mehrere Linsen im Strahlengang des sichtbaren Lichts können den Strahlengang des sichtbaren Lichts aufweiten. Hierdurch kann vorteilhafterweise der Winkelbereich reduziert werden, um den der sichtbare Lichtstrahl ursprünglich abgelenkt werden muss.

Durch ein Schrägstellen der Linse kann diese in vorteilhafter Weise gleichzeitig als Spiegel dienen. Um die Reflexion von sichtbarem Licht zu verbessern, kann die der Messfläche zugewandte Seite der Linse mit einer dünnen Metallschicht versehen sein.

Halbleiterlaser stellen eine intensive Lichtquelle dar, deren Licht mit geringem Aufwand und hoher Genauigkeit parallelisiert werden kann.

Eine Markierung der Messfläche durch Punkte weist eine geringere auszuleuchtende Fläche als eine kreisförmige Markierung auf. Bei beschränkter Lichtleistung können deshalb die Punkte heller erleuchtet werden.

Durch das lauflichtförmige Erleuchten von Punkten können zusätzliche Informationen über die Veränderung des Messwerts dargestellt werden. Dabei kann die Richtung das Vorzeichen der Veränderung darstellen und die Geschwindigkeit den Betrag der Veränderung.

Durch Blinken der Punkte kann in vorteilhafter Weise ein Alarm dargestellt werden. Der Alarm kann dann ausgegeben werden, wenn der Messwert einen Schwellenwert über- oder unterschreitet.

Im Folgenden werden bevorzugte Ausführungsformen der Erfindung unter Bezugnahme auf die beiliegenden Zeichnungen näher erläutert. Dabei wird Gleiches mit gleichen Bezugszeichen bezeichnet. Es zeigen:
Fig. 1 ein Radiometer, bei dem ein sichtbarer Laserstrahl durch ein Prisma umgelenkt wird und durch eine IR-Linse auf das zu messende Objekts fällt;
Fig. 2 ein ähnliches Radiometer wie das in Fig. 1 dargestellte, bei dem das Prisma die Strahlengänge des Laserstrahls aufweitet;
Fig. 3 ein ähnliches Radiometer wie das in Fig. 1 dargestellte, bei dem der sichtbare Laserstrahl durch einen IR-durchlässigen Spiegel umgelenkt wird;
Fig. 4 ein ähnliches Radiometer wie das in Fig. 3 dargestellte, bei dem der Spiegel ein zentrales Loch aufweist;
Fig. 5 ein ähnliches Radiometer wie das in Fig. 3 dargestellte, bei dem eine Beschichtung einer Linse den IR-durchlässigen Spiegel bildet;
Fig. 6 eine Anordnung von zwei Piezobiegewandlern, um die Richtung eines Laserstrahls zu steuern ;
Fig. 7 eine kardanische Aufhängung eines Lasers von oben;
Fig. 8 eine in Fig. 7 dargestellte kardanische Aufhängung eines Lasers von hinten;
Fig. 9 eine kardanische Aufhängung eines Lasers von oben bei ausgelenktem X-Piezobiegewandler;
Fig. 10 eine in Fig. 9 dargestellte kardanische Aufhängung bei ausgelenktem Y-Piezobiegewandler von hinten;
Fig. 11 eine Seitenansicht eines an Drähten aufgehängten Lasers;
Fig. 12 die in Fig. 11 dargestellte Aufhängung eines Lasers von hinten;
Fig. 13 die in Fig. 11 dargestellte Aufhängung eines Lasers von oben;
Fig. 14 eine Seitenansicht einer Ausführungsform für die Ablenkung eines Laserstrahls durch verspiegelte Piezobiegewandler;
Fig. 15 die in Fig. 14 dargestellte Ausführungsform von hinten;
Fig. 16 umlaufende Markierungen um die Messfläche;
Fig. 17 ein Blinken der Markierung;
Fig. 18 einen sektorisierten Ablenkspiegel;
Fig. 19 ein erzeugtes Punktbild;
Fig. 20 Seitenansicht einer Visiereinrichtung mit einem Piezoaktuator;
Fig. 21 Hinteransicht der Visiereinrichtung mit einem Piezoaktuator;
Fig. 22 Seitenansicht einer Visiereinrichtung mit Spiegelrad;
Fig. 23 Draufsicht auf eine Visiereinrichtung mit Strahlsäge;
Fig. 24 Draufsicht auf eine andere Visiereinrichtung mit Strahlsäge;
Fig. 25 Explosionsdarstellung eines Laserrings; und
Fig. 26 Blockschaltbild einer Laserregelung.

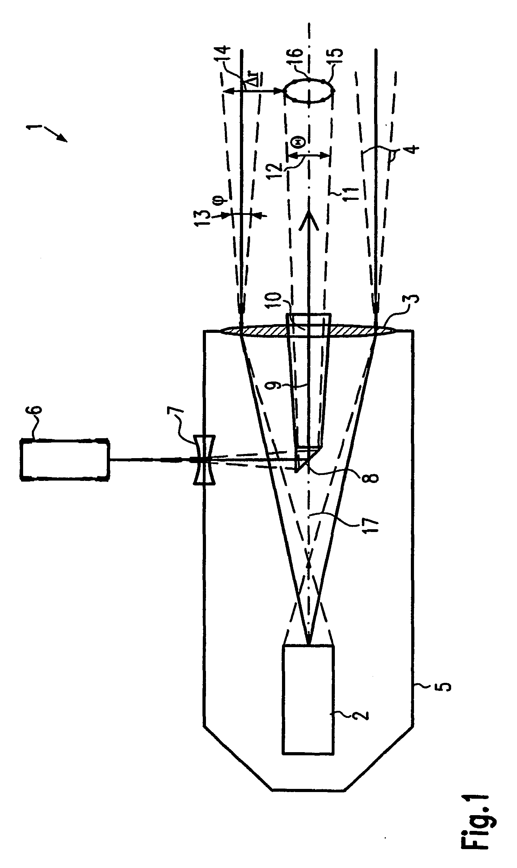

Fig. 1 zeigt eine erste Ausführungsform eines Radiometers 1 mit einem Laservisier. Das Radiometer 1 umfasst einen Pyrosensor 2, eine IR-Linse 3, ein Gehäuse 5, ein Lasermodul 6, eine Linse 7, ein Prisma 8 sowie eine Halterung 9.

Pyrosensor 2 dient als IR-Detektor. In der in Fig. 1 dargestellten Ausführungsform ist der Abstand zwischen Pyrosensor 2 und IR-Linse 3 gerade so groß wie die Brennweite von IR-Linse 3, sodass IR-Linse 3 den Pyrosensor 2 ins Unendliche abbildet. Der Öffnungswinkel ϕ (Bezugszeichen 13) von IR-Strahlengang 4 ergibt sich als Quotient des Durchmessers von Pyrosensor 2 dividiert durch die Brennweite von IR-Linse 3. Stellt IR-Linse 3 beispielsweise eine 40:1 Optik dar, bedeutet dies, dass der Öffnungswinkel ϕ 0,025 im Bogenmaß entsprechend 1,4° beträgt. Hieraus ergibt sich in fünf Meter Entfernung eine Messfläche mit 12,5 cm Durchmesser.

Um die Messfläche korrekt zu markieren, sollte der Öffnungswinkel Θ (Bezugszeichen 12) von Visierstrahlengang 11 dem Öffnungswinkel ϕ des Infrarotstrahlengangs 4 entsprechen. Zu beachten ist, dass die Messfläche nicht scharf begrenzt ist. Vorausgesetzt der Abstand zwischen Messfläche und IR-Linse 3 ist gegenüber dem Durchmesser von IR-Linse 3 groß, weist die Messfläche an ihrem Rand einen Übergangsbereich auf, dessen Breite in radialer Richtung weitgehend unabhängig vom Abstand von der IR-Linse 3 etwa dem Durchmesser von IR-Linse 3 entspricht. IR-Strahlung aus dem Inneren der Messfläche, dessen äußerer Rand vom inneren Rand des Übergangsbereichs gebildet wird, wird bei der Temperaturmessung unabhängig vom Ort ihrer Emissionen weitgehend gleich gewichtet. Innerhalb des Übergangsbereichs wird die Gewichtung von IR-Strahlung um so geringer, je größer der Abstand des Orts ihrer Emissionen von der optischen Achse 17 ist. Am äußeren Rand des Übergangsbereichs erreicht die Gewichtung fast 0. Die Abweichung von 0 außerhalb des Übergansbereichs erklärt sich u. a. durch Streulicht.

Sind die beiden Öffnungswinkel ϕ und Θ von IR-Strahlengang 4 beziehungsweise Visierstrahlengang 11 gleich groß, so markiert die Markierung 15 ziemlich genau die Mitte des Übergangsbereichs. Die Abweichung von der Mitte erklärt sich u. a. dadurch, dass die sichtbaren Lichtstrahlen nicht vom Mittelpunkt von IR-Linse 3, sondern vom Lasermodul 6 ausgehen.

Aufgrund der Dispersion des Materials von IR-Linse 3 könnten Lasermodul 6 und Pyrosensor 2 an unterschiedlichen Orten auf optischer Achse 17 angeordnet werden. Zinkselenit (ZnSe), ein populäres IR-Linsenmaterial, weist für sichtbares Licht einen etwas größeren Brechungsindex als für IR-Strahlung auf. Deshalb müsste Lasermodul 6 zwischen Pyrosensor 2 und IR-Linse 3 angeordnet werden, so dass Lasermodul 6 wohl einen Großteil der IR-Strahlung abschattet und durch seine räumliche Nähe zu Pyrosensor 2 diesen erwärmt. Aus diesem Grund wird bei den im Zusammenhang mit Figuren 1 bis 5 beschriebenen Ausführungsformen ein Umlenkmittel verwendet, um sichtbares Licht in den IR-Strahlengang einzukoppeln.

In der in Fig. 1 dargestellten Ausführungsform wird dieses Umlenkmittel durch Prisma 8 gebildet. Prisma 8 ist durch Halterung 9 an IR-Linse 3 befestigt. IR-Linse 3 kann ein Loch 10 aufweisen, um die Absorption von sichtbarem Licht im Linsenmaterial auszuschalten. Halterung 9 kann in Loch 10 mittels einer Presspassung befestigt sein. Prisma 8 und Halterung 9 können aus einem Spritzgussteil hergestellt werden. In einer anderen Ausführungsform kann Prisma 8 auf IR-Linse 3 beispielsweise durch Kleben befestigt sein. Bei dieser Ausführungsform kann die Absorption im IR-Linsenmaterial durch eine höhere Lichtleistung von Lasermodul 6 ausgeglichen werden.

An Stelle der oben angesprochenen 1:40 Optik kann auch eine 1:9 Optik verwendet werden, woraus sich ein Öffnungswinkel ϕ von etwa 6,4° ergibt. Es ist schwierig, solche Winkel mit Piezobiegewandlern zu erzeugen. Aus diesem Grund kann eine konkave Linse 7 vorgesehen sein, die den Öffnungswinkel der von Lasermodul 6 ausgehenden sichtbaren Lichtstrahlen aufweitet. Eine solche Aufweitung kann in einer anderen Ausführungsform durch Prisma 8 erfolgen. Zu diesem Zweck weist Prisma 8 eine konkave Totalreflexionsfläche auf. Die Totalreflexionsfläche schneidet in Fig. 1 optische Achse 17 etwa unter einem Winkel von 45°.

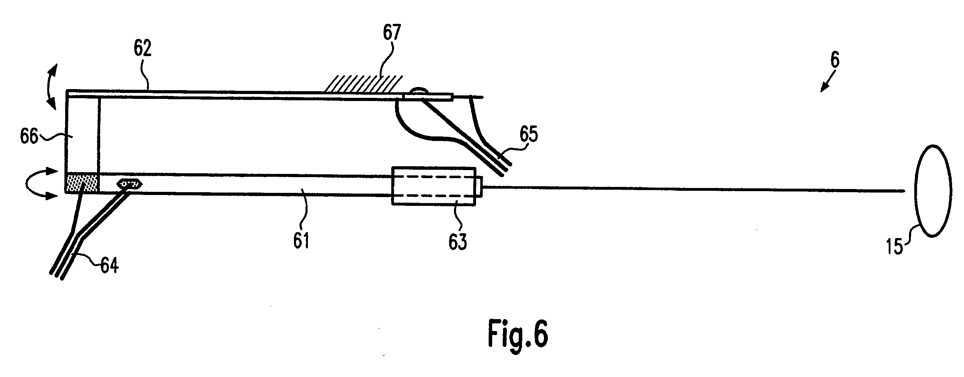

Verschiedene Ausführungsformen von Lasermodul 6 werden im Zusammenhang mit Figuren 6 bis 15 beschrieben.

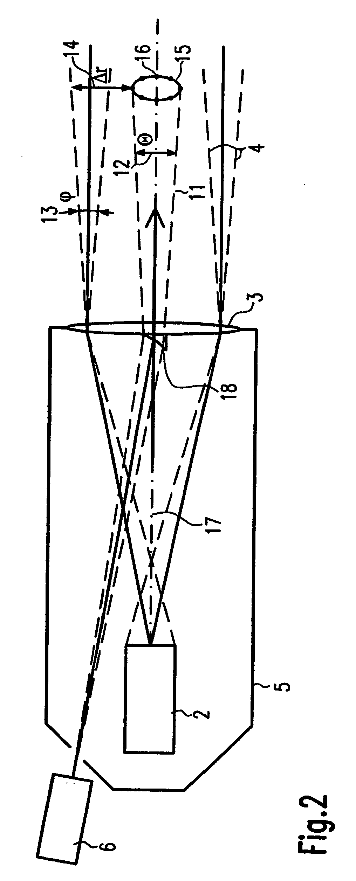

Fig. 2 zeigt ein ähnliches Radiometer wie das in Fig. 1 dargestellte. Abweichend von Fig. 1 wird das zur Markierung 15 der Messfläche dienende sichtbare Licht nicht unter einem 90° Winkel in den IR-Strahlengang 11 eingekoppelt. Vielmehr befindet sich Lasermodul 6 neben Pyrosensor 2, sodass das Laserlicht von hinten eingekoppelt wird. In keilförmigem Prisma 18 findet im Unterschied zu Prisma 8 keine Totalreflexion des sichtbaren Lichts statt. Vielmehr wird das sichtbare Licht gebrochen. Bei der in Fig. 2 dargestellten Ausführungsform weist Prisma 18 eine konkave Fläche zur Aufweitung des Visierstrahlengangs auf. In einer anderen Ausführungsform kann jedoch auch ein Prisma mit ebenen Begrenzungsflächen verwendet werden. Vorteilhaft an der in Fig. 2 dargestellten Ausführungsform ist die kompakte Bauweise, bei der trotzdem eine ausreichende thermische Entkopplung zwischen Pyrosensor 2 und Lasermodul 6 erzielt wird.

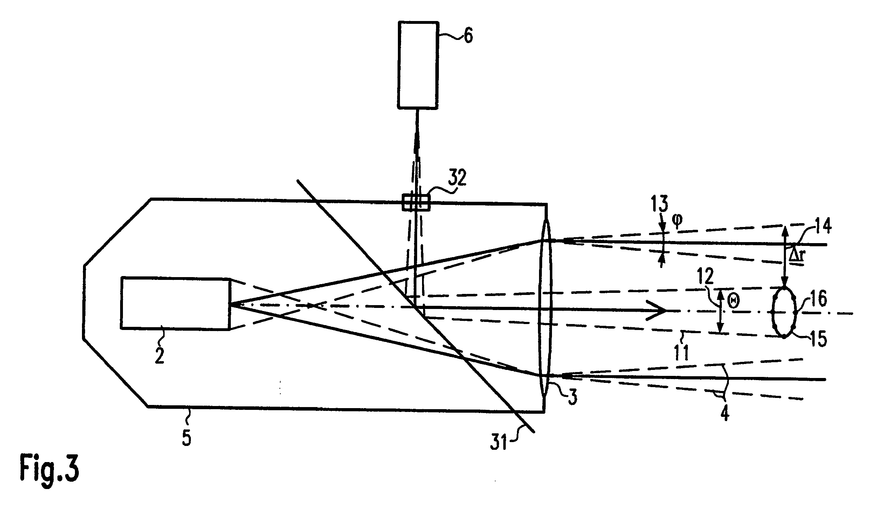

Fig. 3 zeigt ein ähnliches Radiometer wie das in Fig. 1 dargestellte. Im Gegensatz zu dem in Fig. 1 dargestellten Radiometer wird in Fig. 3 der sichtbare Laserstrahl durch einen IR-durchlässigen Spiegel umgelenkt. Die spiegelnde Schicht wird in einer Ausführungsform durch eine dünne Metallschicht gebildet. Als sichtbares Licht wird üblicherweise rotes Licht mit einer Wellenlänge von 670 nm oder 630 nm verwendet. Die zu messende IR-Strahlung hat eine Wellenlänge im Bereich von 8 bis 13 µm. Aufgrund des Skineffekts dringt die langwelligere IR-Strahlung tiefer in eine dicke Metallschicht ein. Die Dicke einer dünnen Metallschicht kann deshalb so gewählt werden, dass sichtbares Licht fast vollständig reflektiert, IR-Strahlung andererseits fast ungeschwächt passiert.

In Fig. 3 ist darüber hinaus Linse 7 durch Glas 32 ersetzt, sodass keine Aufweitung des Öffnungswinkels 12 des Visierstrahlengangs 11 durch Glas 32 erfolgt. Ist eine Aufweitung des Öffnungswinkels 12 erforderlich, kann Glas 32 durch Linse 7 ersetzt werden oder ein gekrümmter, IR-durchlässiger Spiegel 32 verwendet werden. Glas 32 kann auch aus transparentem Kunststoff bestehen.

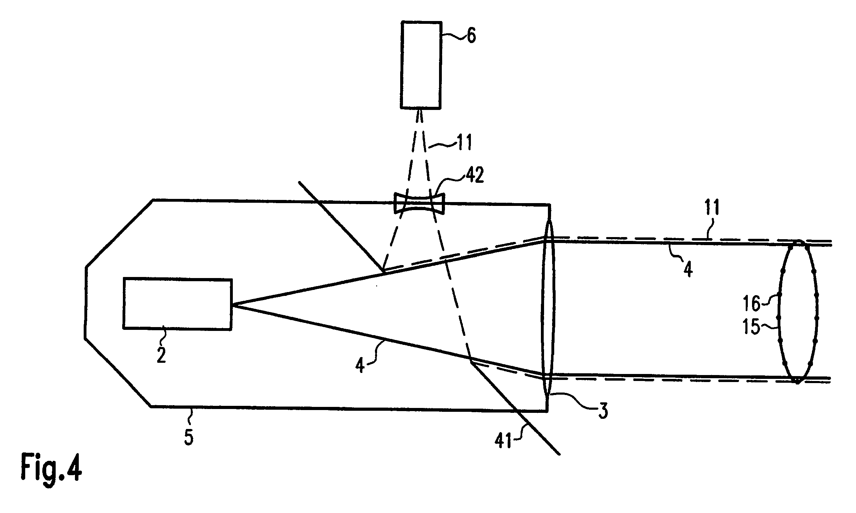

Fig. 4 zeigt ein ähnliches Radiometer wie das in Fig. 3 dargestellte, bei dem der Spiegel 41 ein zentrales Loch aufweist. Durch das zentrale Loch fällt die IR-Strahlung auf Pyrosensor 2. Aus diesem Grund muss Spiegel 41 nicht notwendigerweise IR-durchlässig sein. Eine IR-Durchlässigkeit ist jedoch vorteilhaft, da mehr IR-Strahlung auf Pyrosensor 2 fällt und somit eine genauere Temperaturmessung möglich ist. Das sichtbare Licht passiert IR-Linse 3 in ihrem dünnen Randbereich und wird aus diesem Grund weniger abgeschwächt als würde es die IR-Linse 3 in der Mitte passieren.

Bei der in Fig. 4 dargestellten Ausführungsform kann Pyrosensor 2 weiter als die Brennweite der IR-Linse 3 von IR-Linse 3 entfernt sein. In diesem Fall wird Pyrosensor 2 entlang der optischen Achse 17 ins Endliche abgebildet, sodass der Messstrahlengang ein einschaliger Hyperboloid ist (vgl. DE 100 36 720 A1, Fig. 4 und 6). Um auch bei dieser Ausführungsform die Messfläche unabhängig von ihrem Abstand von IR-Linse 3 korrekt zu markieren, kann Spiegel 41 eine stückweise stetige, schraubenförmige Fläche bilden. Der Spiegel kann beispielsweise acht stetige Abschnitte und damit auch acht Unstetigkeitsstellen aufweisen. Auf diese Weise ist es möglich, einen Visierstrahlengang mit einer Taille S (vgl. DE 100 36 720 A1, Fig. 4, 6) zu erzeugen. In einer anderen Ausführungsform kann ein ebener Spiegel 41 und eine aus der DE 100 36 720 A1 bekannte Fassettenlinse zur Erzeugung eines Visierstrahlengangs mit Taille S verwendet werden. Hierbei deckt die Fassettenlinse den Randbereich von IR-Linse 3 ab.

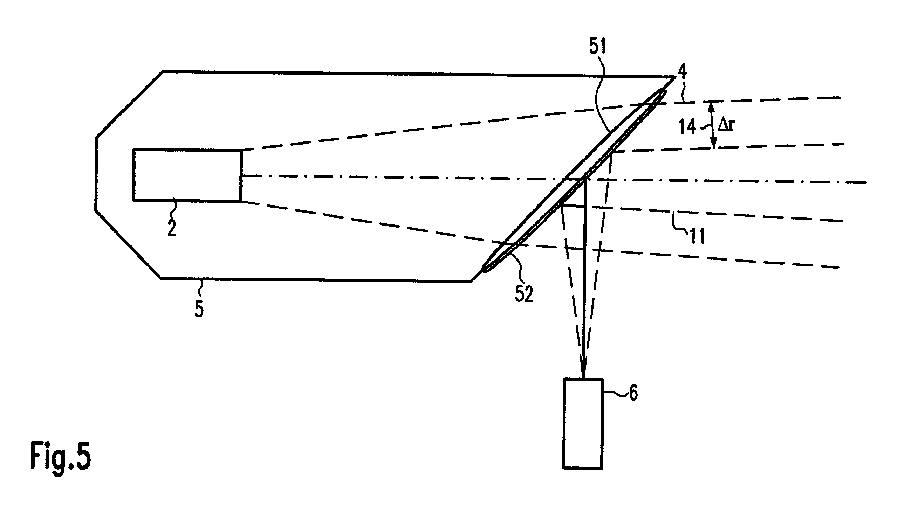

Bei der in Fig. 5 dargestellten Ausführungsform bildet die Vorderseite von IR-Linse 51 eine Spiegelfläche. IR-Linse 51 kann auf ihrer Vorderseite, also der Messfläche zugewandten Seite, mit einer dünnen Metallschicht 52 bedampft sein. Wie oben ausgeführt kann die Dicke der Metallschicht so gewählt werden, dass sichtbares Licht fast vollständig reflektiert, IR-Strahlung jedoch fast vollständig transmittiert wird. Der Krümmungsradius der Vorderseite bestimmt, wie stark Visierstrahlengang 11 durch die Reflexion an der Vorderseite aufgeweitet wird. Keine Aufweitung findet statt, wenn die Vorderseite flach, also der Krümmungsradius unendlich ist. Der Krümmungsradius der Rückseite, also der dem Pyrosensor 2 zugewandten Seite, kann so gewählt werden, dass sich die gewünschte Brennweite von IR-Linse 51 für IR-Strahlung ergibt.

Figuren 6 bis 15 zeigen Ausführungsformen von Lasermodul 6.

Fig. 6 zeigt eine Ausführungsform von Lasermodul 6, bei der zwei Piezobiegewandler 61, 62 Laser 63 tragen. Piezobiegewandler 61 und 62 können eine Länge von etwa 30 mm und einen rechteckförmigen Querschnitt von 1 x 3 mm aufweisen. Piezobiegewandler sind eine Ausführungsform von Piezoaktuatoren. Die Piezobiegewandler biegen sich um ihre schmale Seite, wie dies in Fig. 6 durch Pfeile dargestellt ist. Piezobiegewandler 61 ist durch Verbindungsstück 66 fest mit Piezobiegewandler 62 verbunden. Piezobiegewandler 62 ist an einem Ende durch Befestigung 67 fest eingespannt. Die beiden Piezobiegewandler 61 und 62 sind gegeneinander um 90° verkippt, so dass Piezobiegewandler 61 Laser 63 horizontal (in X-Richtung) und Piezobiegewandler 62 Laser 63 vertikal (in Y-Richtung) auslenkt. Piezobiegewandler 61 und 62 werden durch die Anschlussleitungen 64 beziehungsweise 65 mit Spannung versorgt, die zwischen 0 und mehreren 100 Volt liegen kann.

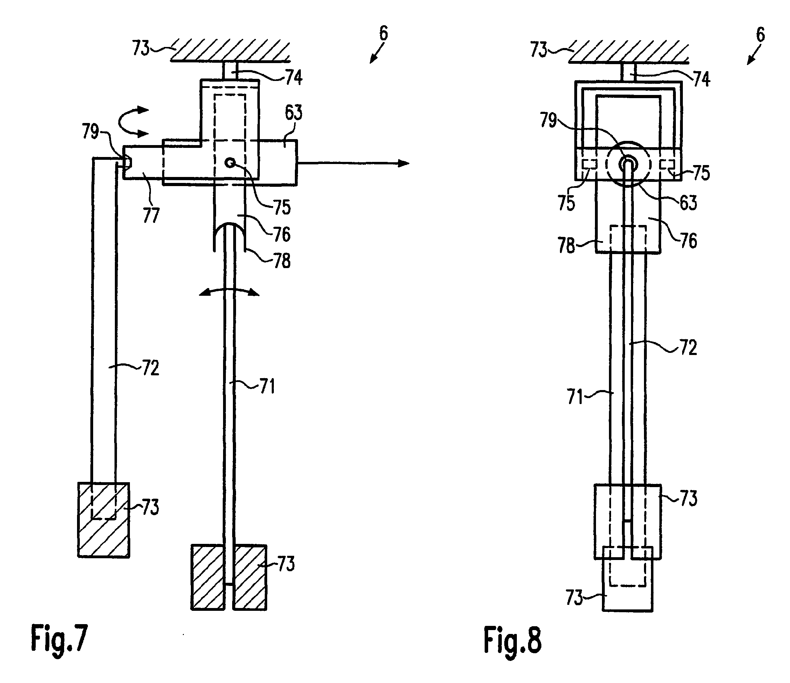

Figuren 7 bis 10 zeigen eine Ausführungsform von Lasermodul 6, bei der Laser 63 kardanisch aufgehängt ist. Vorteilhaft an einer kardanischen Aufhängung des Lasers ist die geringere mechanische Trägheit, die bei gleicher Kraft schnelleres Ansprechen ermöglicht. Laser 63 kann um zwei Achsen gedreht werden, die durch seinen Schwerpunkt verlaufen können. Fig. 7 zeigt eine Draufsicht. Fig. 8 zeigt die katalanische Aufhängung von hinten.

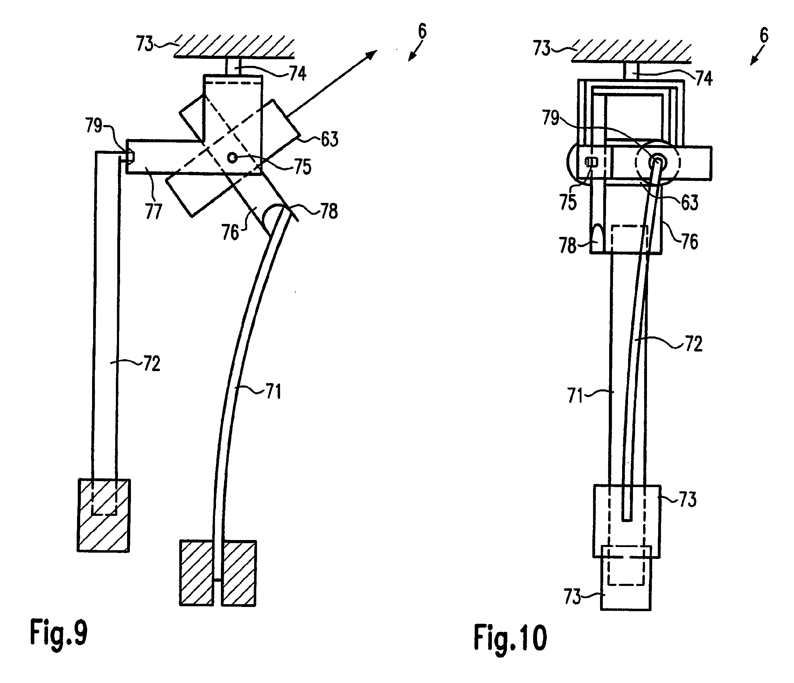

Die kardanische Aufhängung umfasst Lager 73, Achsen 74 und 75, Arme 76 und 77 sowie Führungen 78 und 79. Piezobiegewandler 71 und 72 greifen mit einem Ende jeweils in Führungen 78 beziehungsweise 79 ein und sind an ihrem anderen Ende in Lagern 73 eingespannt. Piezobiegewandler 71 und 72 sorgen für horizontale beziehungsweise vertikale Auslenkung, wie dies in Figuren 9 beziehungsweise 10 dargestellt ist. Ein weiterer Vorteil einer kardanischen Aufhängung besteht darin, dass auf Grund der kürzeren Länge von Armen 76 und 77 gegenüber Piezobiegewandlern 71 und 72 die winkelmäßig geringen Auslenkungen von Piezobiegewandlern von wenigen Grad vervielfacht werden können.

Fig. 9 zeigt eine kardanische Aufhängung eines Lasers von oben bei ausgelenktem X-Piezobiegewandler und Fig. 10 zeigt eine in Fig. 9 dargestellte kardanische Aufhängung bei ausgelenktem Y-Piezobiegewandler von hinten.

In einer anderen Ausführungsform kann Arm 77 durch einen Piezobiegewandler ersetzt werden. Bei dieser Ausführungsform entfällt Piezobiegewandler 72.

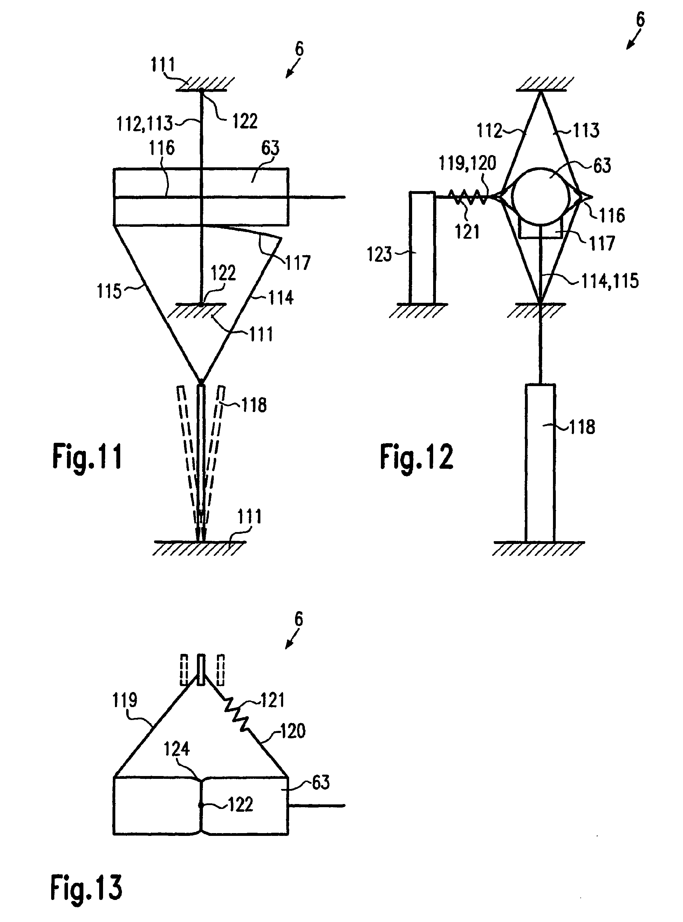

Figuren 11 bis 13 zeigen eine andere Ausführungsform einer kardanischen Aufhängung. Bei dieser Ausführungsform werden Arme 76 und 77 durch Drähte 112 und 113 ersetzt, um die mechanische Trägheit weiter zu reduzieren. Drähte 112 und 113 sind in Lagern 111 befestigt. Laser 63 weist Kanten 116 mit Kerben 124 auf, durch die Drähte 112 und 113 laufen. Kerben 124 definieren eine horizontale Achse, um die Laser 63 durch Piezobiegewandler 118 in vertikaler Richtung ausgelenkt wird. Lager 111 definieren eine horizontale Achse, um die Laser 63 durch Piezobiegewandler 123 in horizontaler Richtung ausgelenkt wird. Horizontale und vertikale Achse sollen durch den Schwerpunkt von Laser 63 verlaufen, um die mechanische Trägheit möglichst gering zuhalten. Drähte 114 und 115 übertragen die Auslenkung von Piezobiegewandler 118 auf Laser 63. Um Spiel zu verhindern, strafft Blattfeder 117 Drähte 114 und 115. In ähnlicher Weise wird die Auslenkung von Piezobiegewandler 123 durch Drähte 119 und 120 auf Laser 63 übertragen. Hier ist Schraubenfeder 121 vorgesehen, um Spiel zu verhindern. An Stelle von Blattfeder 117 kann auch eine Schraubenfeder verwendet werden. Ebenso kann an Stelle von Schraubenfeder 121 eine Blattfeder verwendet werden.

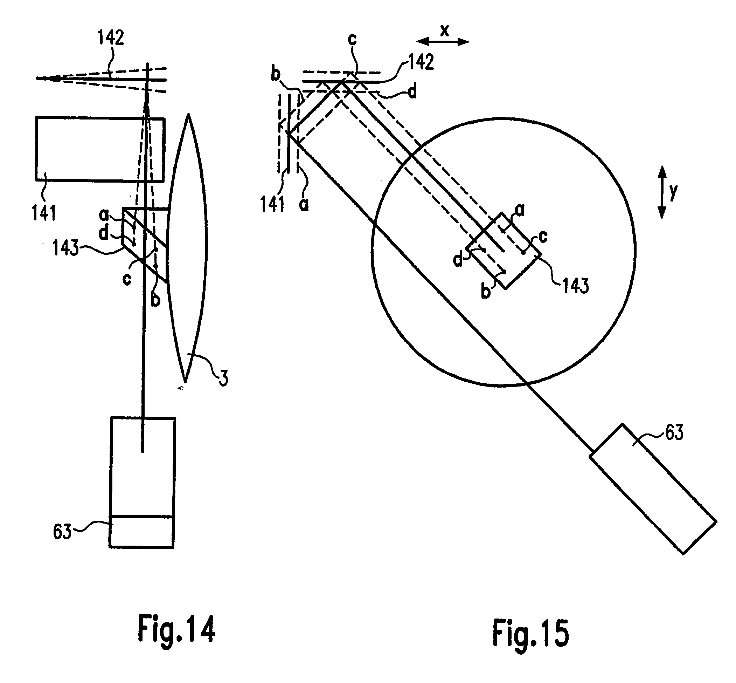

Figuren 14 und 15 zeigen eine Ausführungsform für die Ablenkung eines Laserstrahls durch verspiegelte Piezobiegewandler. Laser 63 emittiert sichtbares Licht, das zunächst auf verspiegelten Piezobiegewandler 141 fällt. Dieser reflektiert das sichtbare Licht weiter auf verspiegelten Piezobiegewandler 142, der das sichtbare Licht auf Prisma 143 umlenkt. Ähnlich zu der in Fig. 1 beschriebenen Ausführungsform lenkt Prisma 143 das sichtbare Licht um etwa 90° ab. Das sichtbare Licht fällt schließlich durch IR-Linse 3 auf die Messfläche und markiert diese. Piezobiegewandler 141 und 142 schließen einen Winkel von 90° ein.

Piezobiegewandler 141 sorgt für Auslenkung in X-Richtung. Piezobiegewandler 142 sorgt für Auslenkung in Y-Richtung. Insbesondere in Fig. 15 sind die Strahlengänge für zwei ausgelenkte Stellungen a und b von Piezobiegewandler 141 sowie zwei ausgelenkte Stellungen c und d von Piezobiegewandler 142 eingetragen. Für Stellungen a und b wird angenommen, dass Piezobiegewandler 142 nicht ausgelenkt ist. Entsprechendes gilt für Stellungen c und d und Piezobiegewandler 141. Die Strahlengänge sind ebenfalls mit einem der Buchstaben a bis d gekennzeichnet. Ohne Auslenkung der Piezobiegewandler 141 und 142 definiert der Laserstrahl eine Laserebene parallel zu Linsenebene von IR-Linse 3, bevor der Laserstrahl durch Prisma 143 aus der Laserebene abgelenkt wird. Durch Auslenkung eines der beiden Piezobiegewandler 141 oder 142 wird der Laserstrahl ebenfalls aus der Laserebene abgelenkt, wie dies in Fig. 14 dargestellt ist.

In einer Abwandlung dieser Ausführungsform kann Piezobiegewandler 142 durch einen segmentierten Spiegel ersetzt werden. Dieser Spiegel ist so geformt, dass die Form seines Außenbereichs dem verspiegelten Piezobiegewandler 142 in Ruhestellung entspricht. Auf diese Weise bleiben die Strahlengänge a und b unverändert. Der Innenbereich kann beispielsweise zwei Segmente umfassen, wobei das eine Segment parallel der Spiegelfläche von Piezobiegewandler 142 in Stellung c und das andere Segment parallel zur Spiegelfläche von Piezobiegewandler 142 Stellungen d ist. So ergeben sich ähnliche Strahlengänge zu den Strahlengänge c und d. In einer weiteren Abwandlung können auch mehrere wie beispielsweise sechs Segmente vorgesehen sein, woraus sich acht Visierstrahlen ergeben. Da Piezobiegewandler 141 näherungsweise eine Sinus-Schwingung ausführt, können die inneren Segmente größer als die äußeren Segmente gewählt werden. Auf diese Weise wird erreicht, dass jeder Visierstrahl einen gleichgroßen Anteil des Laserlichts erhält, und somit die Markierungspunkte gleich hell erscheinen.

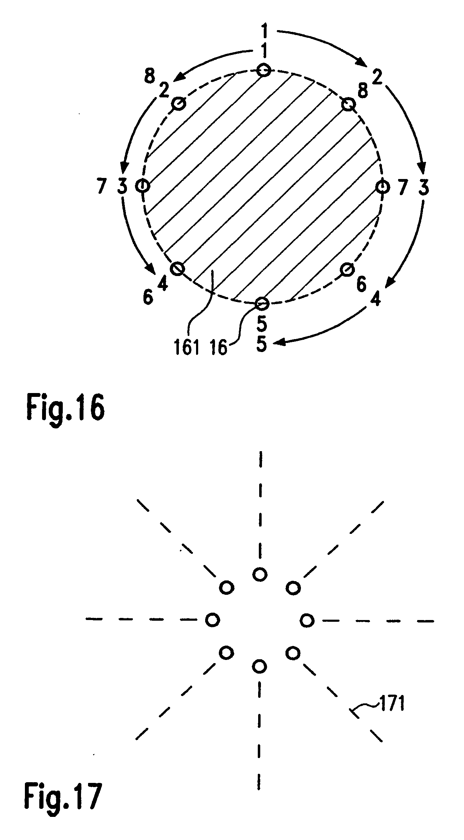

Fig. 16 zeigt beispielhaft die Markierung von Messfläche 161 durch Punkte 16. Wird der Umfang von Messfläche 161 lediglich mit einer geringen Anzahl von Punkten 16 markiert, so ist die zu erleuchtende Fläche kleiner als wenn der gesamten Umfang erleuchtet werden soll. Bei gleicher Lichtleistung erscheinen deshalb Punkte heller als die Umfangslinie. In Fig. 16 beträgt die Anzahl der Punkte 8.

Wird die Umfangslinie oder die einzelnen Punkte mit einer Frequenz von mehr als 25 bis 30 Hz erleuchtet, so nimmt ein Betrachter das Flimmern nicht mehr war. Um dem Betrachter zusätzliche Informationen zu geben kann die Umfangslinie mit einer Frequenz von weniger als 20 Hz im oder gegen den Uhrzeigersinn abgefahren werden. Der Betrachter erkennt jetzt, dass ein Markierungspunkt um die Messfläche herumläuft. Die Umlauffrequenz kann dem Betrag der Änderung der gemessenen Temperatur entsprechen. Der Umlaufsinn kann das Vorzeichen der Änderung der gemessenen Temperatur anzeigen. Beispielsweise kann ein Steigen der Temperatur durch einen Umlauf im Uhrzeigersinn und ein Fallen der Temperatur durch einen Umlauf entgegen des Uhrzeigersinns dargestellt werden.

Durch ein schrittweises Weiterschalten der Auslenkung von Laser 63 kann beim Betrachter der Eindruck erweckt werden, dass lediglich eine begrenzte Anzahl von Punkten, beispielsweise 8, angestrahlt wird. Erfolgt das Weiterschalten zwischen den einzelnen Punkten mit einer Frequenz von weniger als (20 Hz * Punktanzahl), so wird es vom Benutzer wahrgenommen. Wie oben erläutert kann der Umlaufsinn das Vorzeichen und die Frequenz den Betrag der Änderung der gemessenen Temperatur anzeigen.

Ferner ist es möglich, die Punkte 16 oder die Umfangslinie blinken zu lassen. Zu diesem Zweck werden die Punkte 16 oder die Umfangslinie mit einer Frequenz von über 30 Hz erleuchtet. Darüber hinaus wird Laser 63 mit einer Frequenz von unter 20 Hz ein- und ausgeschaltet, was der Benutzer - je nach Frequenz - als Blinken oder Flimmern wahrnimmt. Das Blinken oder Flimmern 171 ist in Fig. 17 durch gestrichelte Linien dargestellt. Dieser Betriebsmodus kann zur Darstellung eines Alarms verwendet werden. Der Alarm kann beispielsweise dann ausgelöst werden, wenn die gemessene Temperatur einen Grenzwert über- oder unterschreitet. Dieser Betriebsmodus kann aber auch dazu verwendet werden, den Abschluss einer Temperaturmessung anzuzeigen oder anzuzeigen, wenn der Betrag der zeitlichen Ableitung der gemessenen Temperaturen unter einem vorgegebenen Schwellenwert liegt.

In einer weiteren Ausführungsform bewegt Lasermodul 6 Laser 63 und damit den Laserstrahl mit konstanter Winkelgeschwindigkeit 2πf von mehr als 2π(30Hz). Laser 63 wird für eine kurze Zeit t mit einer Frequenz von n*f eingeschaltet, wobei die Zeit t kurz gegenüber 1/(n*f) ist. Während der Zeit t wird Laser 63 mit erhöhter Leistung betrieben, so dass die mittlere Leistung von Laser 63 so hoch wie die bei den anderen Ausführungsform ist, bei denen Laser 63 im Dauerstrich betrieben wird. Auch in dieser Ausführungsform wird die Messfläche durch helle, kurze Striche oder Punkte markiert.

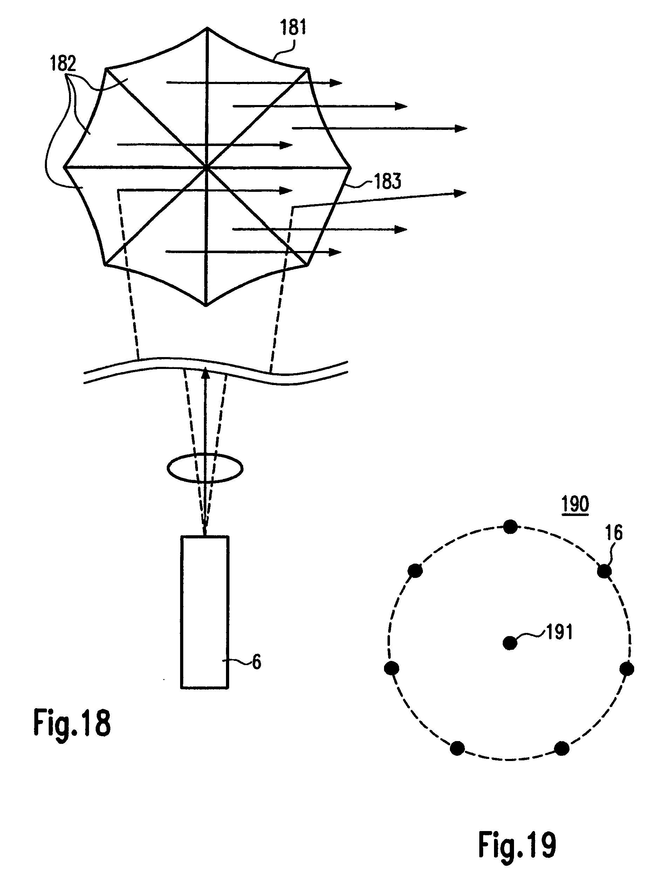

Fig. 18 zeigt einen sektorisierten Spiegel 181 mit sieben konkaven Sektoren 182 und einem nach innen geneigten konkaven Sektor 183. Der sektorisierte Spiegel 181 kann den IR-durchlässigen Spiegel 31 in Fig. 3 oder Spiegel 41 in Fig. 4 ersetzen. Darüber hinaus können Prismen 8 oder 143 durch sektorisierten Spiegel 181 ersetzt werden. Diese Ausführungsform ist der in Fig. 3 dargestellten ähnlich, jedoch deckt der sektorisierte Spiegel bei dieser Ausführungsform nur den zentralen Bereich um die optische Achse herum der IR-Strahlung ab. Schließlich kann die Form der Totalreflexionsfläche von Prisma 8 der Form von sektorisiertem Spiegel 181 entsprechen. In ähnlicher Weise kann die konkave Fläche von Prisma 18 der Form von sektorisiertem Spiegel 181 entsprechen. Der sektorisierte Spiegel 181 kann beispielsweise durch Spritzgießen hergestellt werden.

Der Zweck des sektorisierten Spiegels 181 besteht darin, dass das schrittweise Weiterschalten der Auslenkung von Laser 63 durch den sektorisierten Spiegel 181 erfolgt, während Lasermodul 6 Laser 63 mit konstanter Winkelgeschwindigkeit führt. Jeder einzelne konkave Sektor 182 des sektorisierten Spiegels 181 bildet den Laserstrahl auf einen Punkt 16 ab, während der nach innen geneigte konkave Sektor 183 den Laserstrahl auf den zentralen Punkt 191 abbildet. Im allgemeinen ist es nicht möglich, den Laserstrahl unabhängig vom Abstand zwischen Messfläche und IR-Linse 3 durch jeden Sektor 182 oder 183 exakt auf einen Punkt abzubilden. Trotzdem nimmt die Helligkeit der punktweisen Markierung doch deutlich gegenüber einem Erleuchten der gesamten Umfangslinie der Messfläche zu, auch wenn an Stelle von Punkten kurze Striche erleuchtet werden.

In einer weiteren Ausführungsform kann sektorisierter Spiegel 181 lediglich konkave Sektoren 182 umfassen. Im Punktbild fehlt dann zentraler Punkt 191.

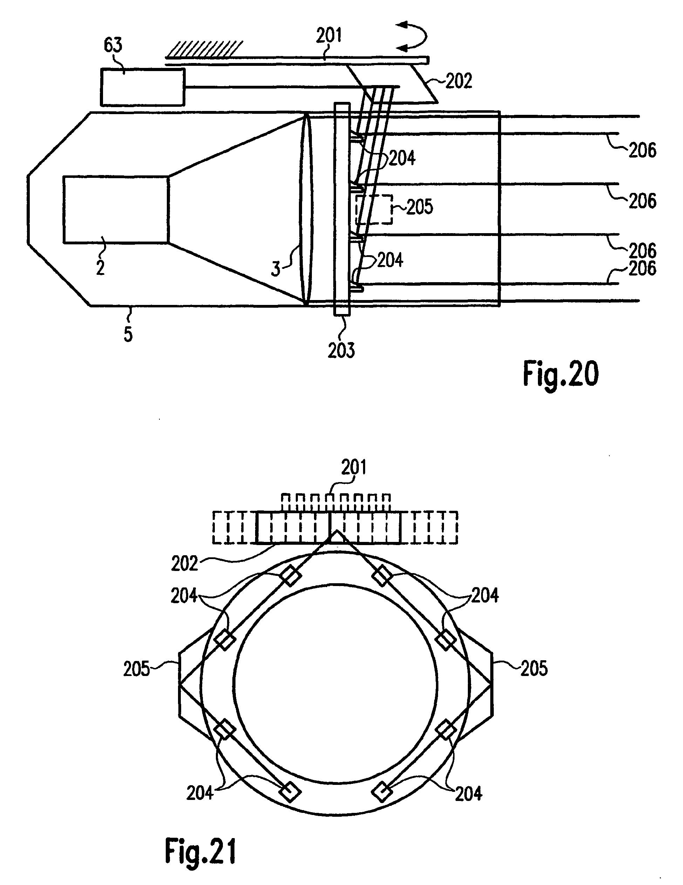

Figuren 20 und 21 zeigen eine Ausführungsform, bei der nur ein Piezobiegewandler erforderlich ist. Diese Ausführungsform umfasst einen Laser 63, einen Piezobiegewandler 201, einen Pflugspiegel 202, einen segmentierten Spiegelring 203 mit Spiegelsegmenten 204 und Seitenspiegeln 205. Diese Bauteile erzeugen Visierstrahlen 206. Wie im Zusammenhang mit anderen Ausführungsformen weiter oben erläutert wurde, dienen Pyrosensor 2, IR-Linse 3 sowie Gehäuse 5 der berührungslosen Temperaturmessung. Spiegelring 203 mit Spiegelsegmenten 204 und Seitenspiegel 205 kann als Spitzgussteil ausgeführt sein. Auch Pflugspiegel 202 kann ein Spitzgussteil sein.

Der segmentierte Spiegelring kann in einer Ebene senkrecht zur optischen Achse angeordnet sein. Piezobiegewandler 201 ist in seiner Ruhestellung parallel zur optischen Achse angeordnet. Piezobiegewandler 201 bewegt Pflugspiegel 202 hin und her. In Fig. 21 ist eine Stellung von Pflugspiegel 202 mit durchgezogenen Linien und weitere sieben Stellungen gestrichelt eingezeichnet. Abhängig von der Stellung von Pflugspiegel 202 wird der Laserstrahl zu einem von insgesamt 8 Spiegelsegmenten 204 umgelenkt. Diese Strahlengänge sind sowohl in Fig. 20 als auch Fig. 21 eingetragen. Jedes Spiegelsegment 204 lenkt den Laserstrahl wiederum zu einem von acht Visierstrahlen 206 um. Damit die Strahlengänge insbesondere zu den unteren vier Spiegelsegmenten nicht durch den IR-Strahlengang verlaufen, und somit Bohrungen im Gehäuse 5 erfordern würden, sind Seitenspiegel 205 vorgesehen. Wie insbesondere in Fig. 20 zu erkennen ist, verlaufen die Strahlengänge zu den unteren Spiegelsegmenten in der oberen Hälfte parallel zu den Strahlengängen zu den oberen Spiegelsegmenten.

Da Piezobiegewandler 201 auch in dieser Ausführungsform näherungsweise eine Sinusschwingung ausführt, können die mittleren Spiegelsegmente größer als die oberen und unteren Spiegelsegmente sein, um alle Markierungspunkte gleich hell zu erleuchten.

Fachleuten ist klar, dass durch die Orientierung der einzelnen Spiegelflächen von Spiegelsegmenten 204 parallele, divergierende oder windschiefe Visierstrahlen 206 erzeugt werden können. Bildet IR-Linse 3 Pyrodetektor 2 ins Endliche ab, sind insbesondere windschiefe Visierstrahlen geeignet, um den Messhyperboloid zu markieren (vgl. DE 100 36 720 A1).

In Abwandlungen dieser Ausführungsform kann Pflugspiegel 202 aus mehr als zwei Segmenten bestehen. So kann der Laserstrahl unmittelbar, also nicht über Seitenspiegel 205, zu den unteren Spiegelsegmenten 204 umgelenkt werden. Ferner können die einzelnen Spiegelsegmente von Pflugspiegel 202 und Spiegelsegmente 204 konkav oder konvex ausgeführt sein, um eine Bewegung der Visierstrahlen in einer bevorzugten Messentfernung zu minimieren. Die Spiegelsegmente können auch so konvex geformt sein, dass die konvexe Form die durch Piezobiegewandler 201 veranlasste Bewegung von Pflugspiegel 202 ausgleicht. Auch dies minimiert die Bewegung der Visierstrahlen.

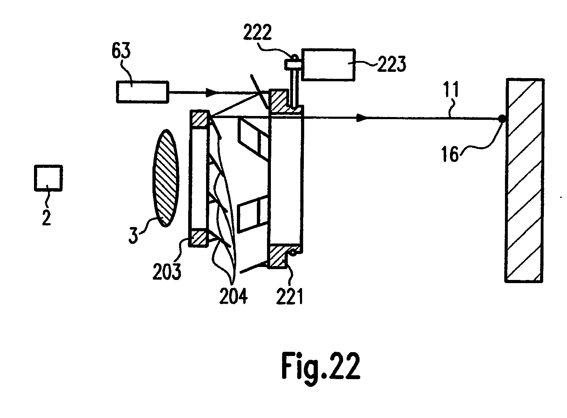

Fig. 22 zeigt eine ähnliche Ausführungsform wie Fig. 21, jedoch ist Pflugspiegel 202 durch Spiegelrad 221 ersetzt. Spiegelrad 221 wird über einen Antriebsriemen 222 durch Motor 223 angetrieben. Sowohl Spiegelring 203 als auch Spiegelrad 221 weisen eine zentrale Öffnung auf, durch die Infrarotstrahlung von der Messfläche durch Linse 3 auf Pyrosensor 2 fällt. Die zentrale Öffnung von Spiegelrad 221 ist etwas größer als die von Spiegelring 203, damit auch die Visierstrahlen 11 durch diese Öffnung zur Messfläche gelangen können.

Spiegelrad 221 und Spiegelring 203 weisen die gleiche Anzahl von Spiegelsegmenten auf. Jedes Spiegelsegment auf Spiegelrad 221 weist einen anderen Winkel gegenüber dem Strahl von Laser 63 auf, wenn der Strahl auf das Spiegelsegment trifft. Auf diese Weise lenkt jedes Segment des Spiegelrades 221 den Laserstrahl zu einem entsprechenden Spiegelsegment auf Spiegelring 203 und damit zu einem entsprechenden Messpunkt 16. Wenn jedes Spiegelsegment einen Ausschnitt aus einer Mantelfläche eines Kegels bildet, wird trotz Bewegung von Spiegelrad 221 der Laserstrahl gleich abgelenkt, solange er auf ein Spiegelsegment von Spiegelrad 221 trifft. Dies eliminiert die Bewegung der Markierungspunkte 16. Jedes Spiegelsegment auf Spiegelrad 221 deckt den gleichen Winkelbereich auf Spiegelrad 221 ab, um eine gleiche Helligkeit der Markierungspunkte zu gewährleisten.

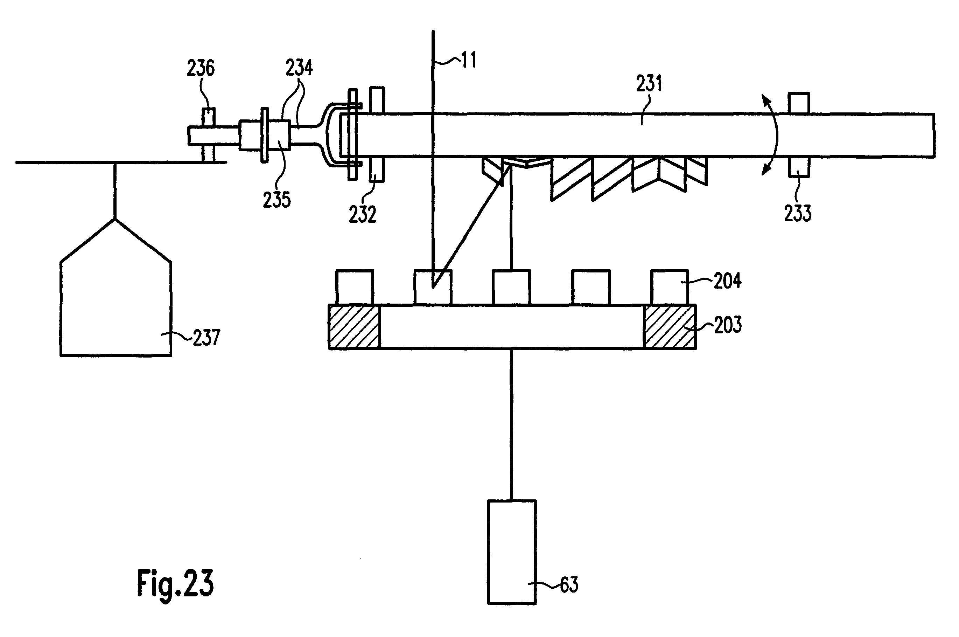

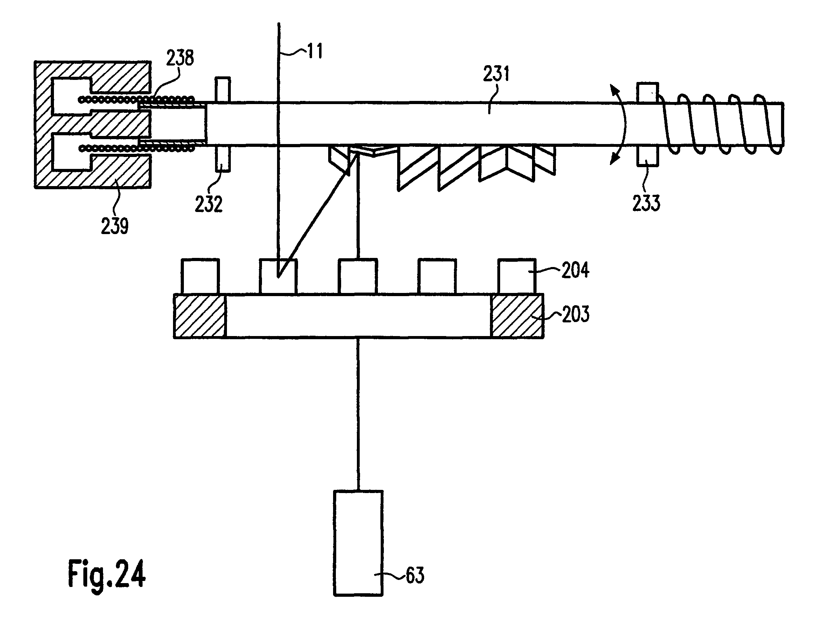

Figuren 23 und 24 zeigen ähnliche Ausführungsformen, bei denen jedoch Spiegelrad 221 durch Strahlsäge 231 ersetzt wurde. Ähnlich wie Spiegelrad 221 weist auch Strahlsäge 231 Spiegelsegmente mit unterschiedlicher Ausrichtung auf. Wieder ist jedem Spiegelsegment auf Strahlsäge 231 ein Spiegelsegment auf Spiegelring 203 zugeordnet. Strahlsäge 231 wird durch Lager 232 und Justagelager 233 gehalten. Durch Justagelager 233 kann Strahlsäge 231 um ihre Längsachse gedreht werden um die Spiegelsegmente von Strahlsäge 231 auszurichten. In weiteren Ausführungsformen können Lager 232 und/oder Justagelager 233 in der Zeichnungsebene nach oben und unten und/oder senkrecht zur Zeichnungsebene zu Justagezwecken bewegbar sein. Die Justage kann durch eine Einstellschraube für jeden Freiheitsgrad erfolgen. Zur Vermeidung von Spiel können die Lager durch Federn gegen die Einstellschrauben vorgespannt sein. Strahlsäge 231 wird durch Motor 237 über Exzenter 236 und Pleuel 234 angetrieben. Pleuel 234 kann eine Justageschraube 235 aufweisen, durch die die Länge von Pleuel 234 verändert werden kann. Justageschraube 235 kann ein Linksgewinde für das rechte Pleuelteil und ein Rechtsgewinde für das linke Pleuelteil aufweisen. Nach der Justage kann Justageschraube 235 durch Schraubenlack fixiert werden.

Aufgrund des Antriebs durch Exzenter 236 und Pleuel 234 vollführt Strahlsäge 231 eine näherungsweise sinusförmige Bewegung. Um eine gleiche Helligkeit der Markierungspunkte zu erreichen, sind die inneren Spiegelsegmente auf Strahlsäge 231 größer als die äußeren. Die Helligkeit der einzelnen Markierungspunkte kann aber auch durch Amplituden- und/oder Pulsweitenmodulation verändert und insbesondere angeglichen werden. Die in Fig. 24 dargestellte Ausführungsform unterscheidet sich von Fig. 23 lediglich durch den Antrieb von Strahlsäge 231. In Fig. 24 wird Strahlsäge 231 durch Spule 238 angetrieben, die je nach Stromfluss mehr oder weniger in Magneten 239 eintaucht. Feder 240 legt die Ruhelage von Strahlsäge 231 fest. Der zeitliche Verlauf der Geschwindigkeit von Strahlsäge 231 kann näherungsweise dreieck- oder sinusförmig sein. In beiden Fällen müssen die inneren Segmente größer als die Äußeren sein, um eine gleiche Helligkeit der Markierungspunkte bei zeitlich konstanter Laserleistung zu gewährleisten.

In jeder der in Figuren 20, 21, 23 und 24 dargestellten Ausführungsformen wird während einer Periode der Bewegung von Pflugspiegel 201 oder Strahlsäge 231 jedes Spiegelsegment zweimal überstrichen. Durch Ausschalten von Laser 63 während der Hin- oder Rückbewegung bei Bewegungsfrequenzen von Pflugspiegel 201 oder Strahlsäge 231 von unter 20 Hz nimmt der Benutzer das Umlaufen der Markierungspunkte um die Messfläche im oder gegen den Uhrzeigersinn wahr. Hierdurch kann dem Benutzer ein Steigen oder Fallen der gemessenen Temperatur angezeigt werden. Die Frequenz kann den Betrag der zeitliche Ableitung der gemessenen Temperatur visualisieren.

Bei Bewegungsfrequenzen oberhalb von 25 bis 30 Hz von Pflugspiegel 201, Spiegelrad 221 oder Strahlsäge 231 nimmt der Benutzer die Markierungspunkte als feststehendes Muster wahr.

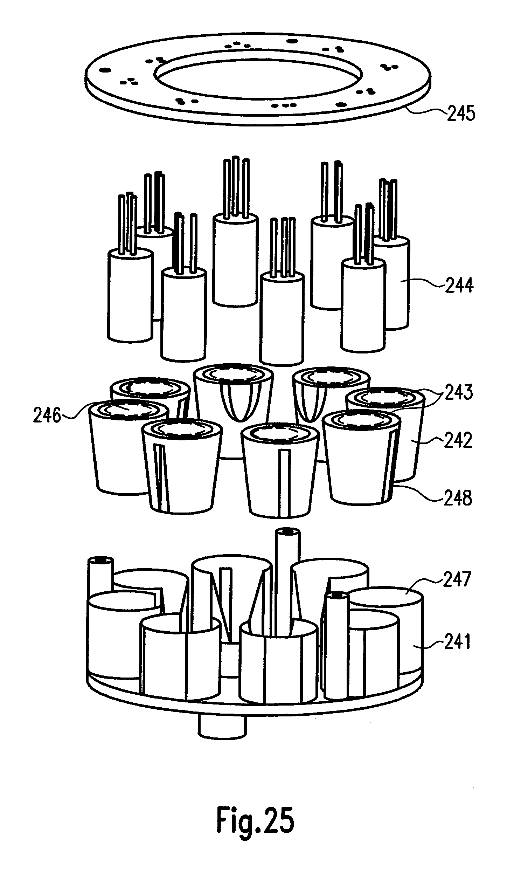

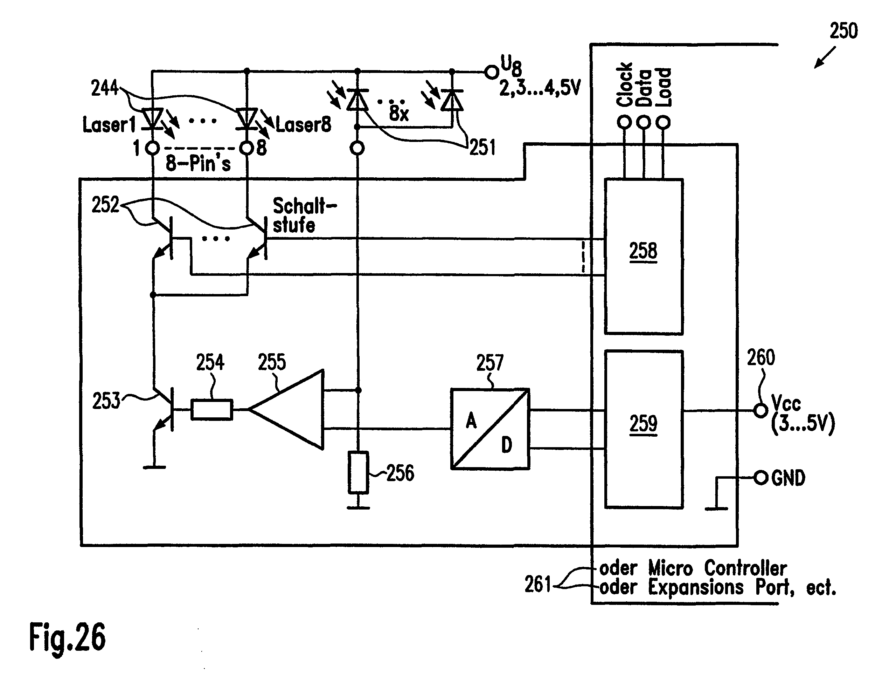

Durch Ein- und Ausschalten von Laser 63 kann die Helligkeit einzelner Markierungspunkte verändert werden. Ferner kann durch geschicktes Ein- und Ausschalten von Laser 63 synchron zur Bewegung von Pflugspiegel 201, Spiegelrad 221 oder Strahlsäge 231 lediglich eine Untergruppe von Markierungspunkten erleuchtet werden. Umfasst die Untergruppe lediglich einen Markierungspunkt und wechselt die Untergruppe nach kurzer Zeit zum nächsten Markierungspunkt, so hat der Benutzer den visuellen Eindruck, dass der Markierungspunkt um die Messfläche herumläuft. Durch geschicktes Ein- und ausschalten von Laser 63 können alle örtlichen und zeitlichen Markierungspunktmuster dargestellt werden, die im Zusammenhang mit der in Figuren 25 und 26 dargestellten Ausführungsform weiter unten erläutert werden.

Bei allen Ausführungsformen mit einem Spiegelring 203 legt die Anzahl von Spiegelsegmenten 204 die maximale Anzahl von Markierungspunkten fest. In einer Ausführungsform können sechs solcher Spiegelsegmente, in einer anderen acht vorgesehen sein.

Fig. 25 zeigt eine Explosionsdarstellung eines Laserrings für eine Visiereinrichtung für ein Radiometer. Fig. 26 zeigt ein Blockschaltbild einer Ansteuerschaltung für die Laser des Laserrings. Gemäß der in Figuren 25 und 26 dargestellten Ausführungsform ist für jeden Markierungspunkt eine Lichtquelle, insbesondere ein Halbleiterlaser 244 vorgesehen.

Insbesondere bei preiswerten Lasern besteht das Problem, dass ihre optische Achse nicht gegenüber dem Gehäuse ausgerichtet ist. Aus diesem Grund sind konische Einzelaufnahmen 242 vorgesehen. Sowohl das Innere als auch das Äußere der Aufnahmen 242 ist konisch. Jeder Laser 244 wird in eine Aufnahme 242 eingeführt. Dann wird die optische Achse des Lasers 244 parallel zu einer mechanischen Achse von Einzelaufnahme 242 ausgerichtet. Die mechanische Achse kann beispielsweise die Rotationsachse von Einzelaufnahme 242 sein. Um später die Anschlussdrähte von Lasern 244 definiert gegenüber Laserring 241 auszurichten, können Einzelaufnahmen 242 eine Nut 248 aufweisen. Deshalb muss die mechanische Achse einer Einzelaufnahme nicht notwendigerweise deren Symmetrieachse sein.

Nach dem Ausrichten wird das Gehäuse von Laser 244 mit Einzelaufnahme 242 mittels einer Vergussmasse 243 vergossen. Als Vergussmasse können beispielsweise ein Elastomer oder Epoxydharzkleber verwendet werden.

Laserring 241, der als Gesamtaufnahme dient, weist für jeden Laser einen Hohlraum 247 auf. Das Innere jedes Hohlraums 247 ist ebenfalls konisch geformt und passt formschlüssig mit dem Äußeren der Einzelaufnahmen 242 zusammen. Werden also in Einzelaufnahmen 242 ausgerichtete und vergossene Laser 244 in Hohlräume 247 von Laserring 241 eingeführt, so sind die Laser 244 automatisch gegenüber Laserring 241 ausgerichtet. Schließlich wird noch Deckel 245 montiert. Laserring 241 ist außerdem so geformt, dass er nach seinem Einbau in das Gehäuse des Radiometers automatisch gegenüber der optischen Achse des IR-Strahlengangs ausgerichtet ist.

Fig. 26 zeigt ein Blockschaltbild einer Ansteuerschaltung 250 für Laser 244. Die Ansteuerschaltung umfasst Laser 244, Photodioden 251, Schalttransistoren 252, Leistungstransistor 253, Widerstand 254, Regler 255, Widerstand 256, DA-Wandler 257, Schieberegister 258 und 259 und Versorgungsspannungsanschluss 260. Die beiden Schieberegister 258 und 259 können durch einen Prozessor 261, insbesondere einen Mikrocontroller, oder einen Expansionsport ersetzt sein.

Die Ansteuerschaltung steuert über einen Mikrocontroller beispielsweise acht Laser 244. Die Laser werden im Multiplexverfahren angesteuert, sodass nur ein Laser gleichzeitig eingeschaltet ist. In einer anderen Ausführungsform können auch zwei Laser gleichzeitig eingeschaltet sein. In dieser Ausführungsform sind zwei Regler 255 vorgesehen. Die Laser haben eine Stromaufnahme von ca. 50 mA.

Da die Laserleistung aus Sicherheitsgründen begrenzt und für jeden Laser individuell abgeglichen werden muss, ist die Regelung so ausgelegt, dass für jeden Laser ein individueller Sollwert eingestellt werden kann. Die verschiedenen Sollwerte sind in Schieberegister 259 digital gespeichert. Schieberegister 259 gibt den aktuellen Sollwert an DA-Wandler 257 aus. Dieser führt eine Digital-Analog-Wandlung durch und gibt den analogen Sollwert an Regler 255 aus. Der Istwert für die Laserregelung wird aus Photodioden 251 gewonnen. Der Fotostrom erzeugt an Widerstand 256 einen Spannungsabfall und wird als Istwert Regler 255 zugeführt. Für jeden Laser 244 ist eine Photodiode 251 vorgesehen. Um mit einer möglichst geringen Anzahl von Pins auszukommen, sind die Photodioden parallel geschaltet.

Die Laserauswahl erfolgt über Schieberegister 258 und Schalttransistoren 252. Schieberegister 258 sorgt dafür, dass lediglich einer der Schalttransistoren 252 leitend geschaltet ist, sodass die Schalttransistoren als Schaltelemente wirken. Der leitende Schalttransistor verbindet den entsprechenden Laser mit Leistungstransistor 253. Dieser erhält das Ausgangssignal von Regler 255 über Widerstand 254.

Alternativ zur Ansteuerung über Schieberegister 258 und 259 kann ein Parallelbus mit insgesamt acht Bit Breite verwendet werden. Davon sind vier Bit für DA-Wandler 257, 3 Bit für die Laserauswahl mit nachgeschaltetem 1 aus acht Dekodierer und ein Bit für Power down vorgesehen.

Die Multiplexfrequenz liegt im Bereich unter 1 kHz. Die Betriebsspannung U_{B} für die Laser muss nicht stabilisiert, aber größer als 2,3 Volt sein.

Die Steuerung der Laser 244 kann nun so erfolgen, dass sie nacheinander mit einer Frequenz von mehr als etwa 25 bis 30 Hz eingeschaltet werden. Wie oben erwähnt ist in diesem Fall das Multiplexen für den Betrachter unsichtbar und die Markierung der Messfläche erscheint als stehendes Bild. Erfolgt das Multiplexen mit einer geringeren Frequenz als etwa 20 Hz, so nimmt dies der Betrachter als Lauflichteffekt war. Die Frequenz kann proportional zum Betrag der zeitlichen Ableitung der gemessenen Temperatur gewählt werden und die Umlaufrichtung das Vorzeichen der Temperaturänderung angeben.

Ferner können durch Erleuchten einer Untergruppe von Lasern mit einer Frequenz über 25 Hz geometrische Formen wie etwa Dreieck, Viereck, Raute, Sechseck etc. angezeigt werden. Diese Bilder können dann bestimmten Messzuständen zugeordnet werden. Messzustände können z. B. sein: gemessene Temperatur liegt in einem Temperaturbereich, gemessene Temperatur über- oder unterschreitet einen Grenzwert oder Batteriealarm.

Auch können die Laser in zwei Untergruppen eingeteilt werden. Die Laser der ersten Untergruppe werden beispielsweise so schnell aus- und eingeschaltet, dass dies der Benutzer als Dauerlicht wahrnimmt. Die Laser der zweiten Untergruppe werden so langsam aus- und eingeschaltet, sodass der Benutzer das Blinken wahrnimmt. Durch diese Kombination können dem Benutzers sowohl die Änderungsrate der gemessenen Temperatur als auch Messzustände visualisiert werden.

Anstelle von Lasern können in obigen Ausführungsformen auch andere Lichtquellen eingesetzt werden. Hierfür kommen vor allem LEDs und Bogenlampen mit einer entsprechenden Optik in Frage.

Die in dieser Anmeldung beschriebenen Visiereinrichtungen können nicht nur für Radiometer, sondern beispielsweise auch für andere IR-Geräte wie beispielsweise IR-Kameras eingesetzt werden. Eine IR-Kamera unterscheidet sich von einem Radiometer lediglich dadurch, dass ein Radiometer einem Messwert für eine Messfläche, eine IR-Kamera dagegen eine Vielzahl von Messwerten für eine Vielzahl von Teilmessflächen liefert. Bei einer Kamera werden die einzelnen Teilmessflächen oft als Pixel bezeichnet. Dabei ist wiederum unerheblich, ob der Sensor selbst mehrere Messwerte liefert oder die einzelnen Teilmessflächen im Zeitmultiplexverfahren abgetastet werden. In letzterem Fall kann beispielsweise die Messrichtung durch bewegte Spiegel verändert werden. Alternativ kann der IR-Sensor bewegt werden oder es können beide Verfahren kombiniert werden, so dass beispielsweise eine Abtastung in X-Richtung durch Sensorbewegung und in y-Richtung durch Spiegelbewegung erreicht wird.

## Patentansprüche

1. Visiereinrichtung für ein IR-Gerät (1) zum sichtbaren Markieren einer Messfläche, mit:
mindestens drei Lichtquellen (244), wobei jede Lichtquelle (244) einen sichtbaren Lichtstrahl emittiert und die Lichtquellen (242) so angeordnet sind, dass die Lichtstrahlen helle Punkte am Rand der Messfläche erzeugen; und
eine Steuerschaltung (252 - 260) zum Ein- und Ausschalten der mindestens drei Lichtquellen (244), wobei die Steuerschaltung (252 - 260) mit jeder der Lichtquellen verbunden und so beschaffen ist, dass höchstens zwei Lichtquellen gleichzeitig eingeschaltet sind;
**dadurch gekennzeichnet, dass**
die Steuereinrichtung das Ein- und Ausschalten der mindestens drei Lichtquellen (244) so steuert, dass die Punkte in einer vorgegebenen Reihenfolge mit einer Frequenz von bis zu 20 Hz angeleuchtet werden, sodass ein Benutzer den visuellen Eindruck hat, ein Punkt würde um die Messfläche herumlaufen, wobei die Frequenz in einem monotonen Zusammenhang mit dem Betrag der zeitlichen Ableitung einer vom IR-Gerät gemessenen Temperatur steht.

2. Visiereinrichtung gemäß Anspruch 1, **dadurch gekennzeichnet, dass** eine Untergruppe aller Punkte erleuchtet wird, wobei die Untergruppe einem Messzustand wie z. B. Grenzwertüberschreitung oder Batteriealarm zugeordnet ist.

3. Visiereinrichtung gemäß Anspruch 1, **dadurch gekennzeichnet, dass** eine erste Untergruppe aller Punkte mit einer Frequenz von bis zu 20 Hz in einer vorgegebenen Reihenfolge erleuchtet werden und eine zweite Untergruppe aller Punkte mit einer Frequenz von über 25 Hz erleuchtet werden, wobei die erste und zweite Untergruppe Messzustände anzeigen.

4. Visiereinrichtung gemäß einem der Ansprüche 1 bis 3, **dadurch gekennzeichnet, dass** die Steuerschaltung (252 - 260) eine Schaltstufe (252) aufweist, die für jede Lichtquelle (244) ein Schaltelement umfasst, wobei jede Lichtquelle mit einem Schaltelement verbunden ist, und alle Schaltelemente mit einem Regler (255) verbunden sind, wobei der Regler (255) die Helligkeit der mit ihm verbundenen Lichtquelle regelt.

5. Visiereinrichtung gemäß Anspruch 4, **dadurch gekennzeichnet, dass** die Steuerschaltung ferner einen Digital-Analog-Wandler (257) und einen Prozessor (261) aufweist, wobei der Prozessor mit der Schaltstufe (252) verbunden ist, um diese zu steuern und eine Lichtquelle (244) einzuschalten, wobei der Prozessor mit dem Digital-Analog-Wandler (257) verbunden ist und dem Digital-Analog-Wandler (257) einen digitalen Sollwert zuführt, wobei der Digital-Analog-Wandler (257) den digitalen Sollwert in einen analogen Sollwert wandelt, den der Digital-Analog-Wandler (257) dem Regler (255) zuführt, wobei dem Regler ferner (255) ein Istwert von einer Photodiode (251) zugeführt wird, wobei die Photodiode (251) die Helligkeit der eingeschalteten Lichtquelle (244) misst, und wobei der Regler (255) sein Ausgangssignal über die Schaltstufe (252) der eingeschalteten Lichtquelle (244) zuführt.

6. Verfahren für ein IR-Gerät (1) zum sichtbaren Markieren einer Messfläche, mit:
Messen (2) der Temperatur der Messfläche;
Emittieren mindestens dreier sichtbarer Lichtstrahlen durch Lichtquellen (244) zum Markieren der Messfläche durch Punkte, wobei jede Lichtquelle (244) einen Lichtstrahl emittiert und damit einen Punkt erleuchtet; und
Ein- und Ausschalten der mindestens drei Lichtquellen (244), wobei höchstens zwei Lichtquellen gleichzeitig eingeschaltet sind,
**dadurch gekennzeichnet, dass**
die Lichtstrahlen in einer vorgegebenen Reihenfolge mit einer Frequenz von bis zu 20 Hz ein- und ausgeschaltet werden, sodass ein Benutzer den visuellen Eindruck hat, ein Punkt würde um die Messfläche herumlaufen, wobei die Frequenz in einem monotonen Zusammenhang mit dem Betrag der zeitlichen Ableitung der gemessenen Temperatur steht.

## Claims

1. Sighting device for a radiometer (1) for visibly marking a measuring surface, comprising:
at least three light sources (244), each light source (244) emitting a visible light beam and said light sources (242) being arranged such that said light beams generate bright points at the edge of said measuring surface; and
a control circuit (252 - 260) for switching said at least three light sources (244) on and off, said control circuit (252 - 260) being connected to each of said light sources and being constructed such that at most two light sources are switched on simultaneously,
**characterized in that**
said control circuit controls the switching on and off of the at least three light sources (244) such that said points are illuminated in a predefined order at a frequency of up to 20 Hz so that a user has the visual impression a point would travel around said measuring surface, said frequency being in a monotonous relationship with the sum of the time derivative of a temperature measured by said radiometer.

2. Sighting device according to claim 1, **characterized in that** a subgroup of all points is illuminated, said subgroup being associated with a measured state, e.g. exceeding of a limit value or battery alarm.

3. Sighting device according to claim 1, **characterized in that** a first subgroup of all points is illuminated in a predefined order at a frequency of up to 20 Hz and that a second subgroup of all points is illuminated at a frequency of more than to 25 Hz, said first and second subgroup displaying measured states.

4. Sighting device according to one of claims 1 to 3, **characterized in that** said control circuit (252 - 260) comprises a switching circuit (252) including a switching element for each light source (244), each light source being connected to a switching element and all switching elements being connected to a controller (255), wherein said controller (255) controls the brightness of said light source connected therewith.

5. Sighting device according to claim 4, **characterized in that** said control circuit further comprises a digital/analog converter (257) and a processor (261), said processor being connected to said switching circuit (252) for controlling the same and for switching on a light source (244), said processor being connected to said digital/analog converter (257) and supplying a digital target value to said digital/analog converter (257), said digital/analog converter (257) converting said digital target value into an analog target value supplied by said digital/analog converter (257) to said controller (255), wherein said controller (255) is moreover supplied with an actual value from a photodiode (251), said photodiode (251) measuring said brightness of said switched on light source (244), and said controller (255) supplying its output signal to said switched on light source (244) via said switching circuit (252).

6. Method for a radiometer (1) of visibly marking a measuring surface, comprising:
measuring (2) the temperature of said measuring surface;
emitting at least three visible light beams by light sources (244) for marking said measuring surface by points; each light source (244) emitting one light beam and thus illuminating one point; and
switching said at least three light sources (244) on and off, at most two light sources being switched on simultaneously,
**characterized in that**
said light beams are switched on and off in a predefined order at a frequency of up to 20 Hz so that a user has the visual impression a point would travel around said measuring surface, said frequency being in a monotonous relationship with the sum of the time derivative of the measured temperature.

## Revendications

1. Dispositif de visée pour appareil infrarouge (1) pour marquer de façon visible une surface de mesure, avec :
au moins trois sources lumineuses (244), chaque source lumineuse (244) émettant un faisceau lumineux visible et les sources lumineuses (242) étant disposées de telle sorte que les faisceaux lumineux génèrent des points clairs au bord de la surface de mesure ; et
un circuit de commande (252 - 260) pour connecter et déconnecter les au moins trois sources lumineuses (244), le circuit de commande (252 - 260) étant relié à chacune des sources lumineuses et conçu de telle sorte que tout au plus deux sources lumineuses sont connectées en même temps ;
**caractérisé en ce que :**
le dispositif de commande commande de telle sorte la connexion et la déconnexion des au moins trois sources lumineuses (244) que les points sont éclairés dans une séquence préalablement prévue à une fréquence pouvant atteindre 20 Hz, de sorte qu'un utilisateur a l'impression visuelle qu'un point tourne autour de la surface de mesure, la fréquence étant en relation monotone avec la quantité de déviation dans le temps d'une température mesurée par l'appareil infrarouge.

2. Dispositif de visée selon la revendication 1, **caractérisé en ce qu'**un sous-groupe regroupant tous les points est éclairé, le sous-groupe étant associé à un état mesuré tel que, par exemple, le dépassement d'une valeur limite ou une alarme de batterie.

3. Dispositif de visée selon la revendication 1, **caractérisé en ce qu'**un premier sous-groupe regroupant tous les points est éclairé à une fréquence pouvant atteindre 20 Hz dans une séquence préalablement prévue et qu'un deuxième sous-groupe regroupant tous les points est éclairé à une fréquence de plus de 25 Hz, les premier et deuxième sous-groupes indiquant des états mesurés.

4. Dispositif de visée selon l'une quelconque des revendications 1 à 3, **caractérisé en ce que** le circuit de commande (252 - 260) comporte un étage de commutation (252) comprenant pour chaque source lumineuse (244) un élément de commutation, chaque source lumineuse étant reliée à un élément de commutation et tous les éléments de commutation étant reliés à un variateur d'intensité (255), le variateur d'intensité (255) réglant la luminosité de la source lumineuse reliée à lui.

5. Dispositif de visée selon la revendication 4, **caractérisé en ce que** le circuit de commande comporte en outre un convertisseur numérique analogique (257) et un processeur (261), le processeur étant relié à l'étage de commutation (252) pour le commander et connecter une source lumineuse (244), le processeur étant relié au convertisseur numérique analogique (257) et envoyant au convertisseur numérique analogique (257) une valeur théorique numérique, le convertisseur numérique analogique (257) transformant la valeur théorique numérique en une valeur théorique analogique que le convertisseur numérique analogique (257) envoie au variateur d'intensité (255), une valeur réelle d'une photodiode (251) étant en outre envoyée au variateur d'intensité (255), la photodiode (251) mesurant la luminosité de la source lumineuse (244) connectée, le variateur d'intensité (255) envoyant son signal de sortie à travers l'étage de commutation (252) de la source lumineuse (244) connectée.

6. Procédé pour appareil infrarouge (1) pour marquer de façon visible une surface de mesure, avec :
mesure (2) de la température de la surface de mesure ;
émission d'au moins trois faisceaux lumineux visibles à travers les sources lumineuses (244) pour marquer la surface de mesure par des points, chaque source lumineuse (244) émettant un faisceau lumineux et éclairant ainsi un point ; et
connexion et déconnexion des au moins trois sources lumineuses (244), deux sources lumineuses étant tout au plus connectées en même temps ;
**caractérisé en ce que** :
les faisceaux lumineux sont connectés et déconnectés dans une séquence préalablement prévue à une fréquence pouvant atteindre 20 Hz ; de sorte qu'un utilisateur a l'impression visuelle qu'un point tourne autour de la surface de mesure, la fréquence étant en relation monotone avec la quantité de déviation dans le temps de la température mesurée.
